# EUROPEAN PATENT SPECIFICATION

(11) **EP 0 900 343 B1**
(45) Date of publication and mention of the grant of the patent: **10.10.2001**
(21) Application number: 97924042.1
(22) Date of filing: 29.05.1997
(51) Int. Cl.: F16H 21/18, F01B 9/02, F16H 21/36, F02B 75/32

(54) **PISTON MECHANISM**
MECHANISMUS FÜR KOLBENTRIEB
MECANISME DE PISTON

(30) Priority: 29.05.1996 FI 960326 U
(43) Date of publication of application: 10.03.1999
(73) Proprietor: Hayrynen, Ismo, 53850 Lappeenranta (FI)
(72) Inventor: Hayrynen, Ismo, 53850 Lappeenranta (FI)
(74) Representative: Tanhua, Pekka Vilhelm
(86) International application number: FI9700327
(87) International publication number: WO9745657

(56) References cited:
- EP-A- 0 708 274
- EP-A- 0 754 880
- DE-A- 3 024 782
- DE-A- 3 420 956

## Description

The object of the invention is a piston mechanism presented in the introductory part of the independent claim, suitable to be used in various applications, such as combustion engines and positive-displacement pumps. An example of such a piston mechanism is disclosed in DE-A-3 024 782.

A common piston mechanism currently used comprises a piston that moves linearly inside a fixed cylinder, the linear movement being converted, with the intermediary of a driving rod, into the rotating movement of a crankshaft. Moment effects are caused by changes in the rotative velocity of the piston mechanism because of the moments of inertia of the parts (including the crankshaft and the driving rod). A precise balancing of the said piston mechanism requires the use of a multicylinder mechanism or special structures. The weaknesses of a dynamically balanced Wankel mechanism (sealing problems, for example) have been limiting its application in practice.

The purpose of the invention is to implement a piston mechanism which is used to eliminate the moment effect caused by the moments of inertia and the masses of the parts when the rotative velocity of the mechanism is changed, and to reduce the wearing between the cylinder and the piston with the aid of a structure that replaces the driving rod of a conventional piston mechanism.

Another purpose of the invention is to disclose a piston mechanism which is used to achieve dynamic balancing with various implementation alternatives.

The above disadvantages can be eliminated and the above-defined purposes achieved by the piston mechanism according to the invention which is characterised in what is presented in the characterising clause of the independent claim. The other claims present preferred embodiments of the invention.

The most essential advantage of the invention is that dynamic balancing of the piston mechanism is achieved by it.

In the following, the invention is described in detail with reference to the appended drawings.
Fig. 1 shows the slide-controlled piston mechanism according to the invention where part has been cut away from the cylinder block of the mechanism to show the inner pails of the mechanism and where the mechanism is showed obliquely from above;
Fig. 2 shows the structure of the slide-controlled piston mechanism according to the invention and its main parts in an exploded view;
Fig. 3 shows the eccentric sleeve application of the slide-controlled piston mechanism according to the invention as partly cut and obliquely from above;
Fig. 4 shows the slide sleeve application of the slide-controlled piston mechanism according to the invention as partly cut and obliquely from above;
Fig. 5 shows the gear wheel controlled piston mechanism according to the invention where part has been cut away from the cylinder block of the mechanism to show the inner parts of the mechanism and where the mechanism is shown obliquely from above;
Fig. 6 shows the structure and the main parts of the gear wheel controlled piston mechanism according to the invention in an exploded view;
Figs. 7a-7d show some alternatives for the cylinder location of the piston mechanism according to the invention in exploded views;
Figs. 8a-8d show other alternatives for the cylinder location of the piston mechanism according to the invention in exploded views;
Fig. 9 shows the structure and the main parts of the double-action piston mechanism according to the invention in an exploded view;
Fig. 10 shows an alternative structure of the piston mechanism according to the invention;
Fig. 11 shows another alternative structure of the piston mechanism according to the invention;
Fig. 12 is a partly cut front view of one structural implementation alternative of the piston of the piston mechanism according to the invention;
Fig. 13 is a partly cut front view of another structural implementation alternative of the piston of the piston mechanism according to the invention;
Fig. 14 is a partly cut side view of one structural implementation alternative of the rotating disc of the piston mechanism according to the invention;
Fig. 15 is a partly cut side view of another structural implementation alternative of the rotating disc of the piston mechanism according to the invention;
Fig. 16 is a partly cut side view of one structural implementation alternative of the crankshaft of the piston mechanism according to the invention;
Fig. 17 is a front view of the cylinder block of the slide-controlled piston mechanism according to the invention, the division in parts of the cylinder block being illustrated in the figure.

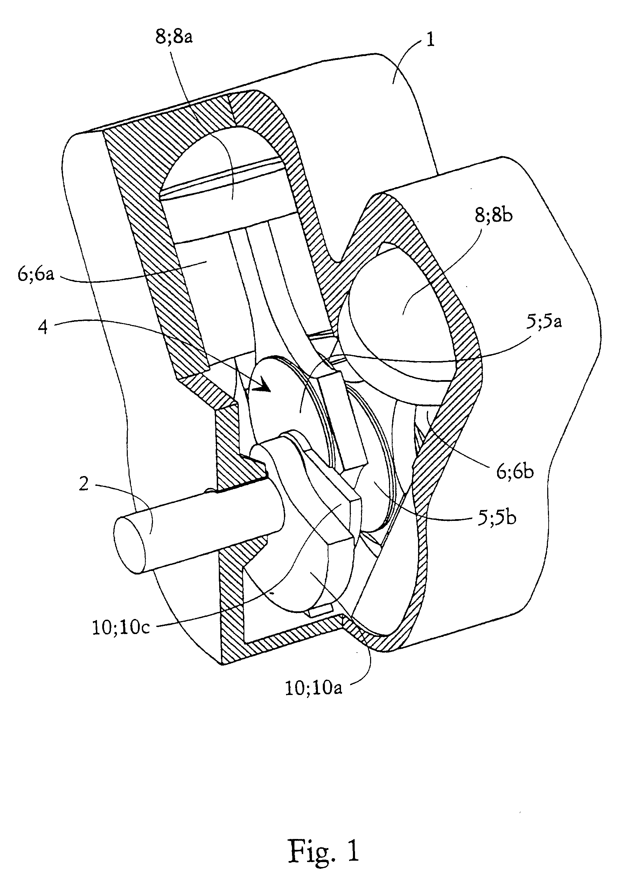

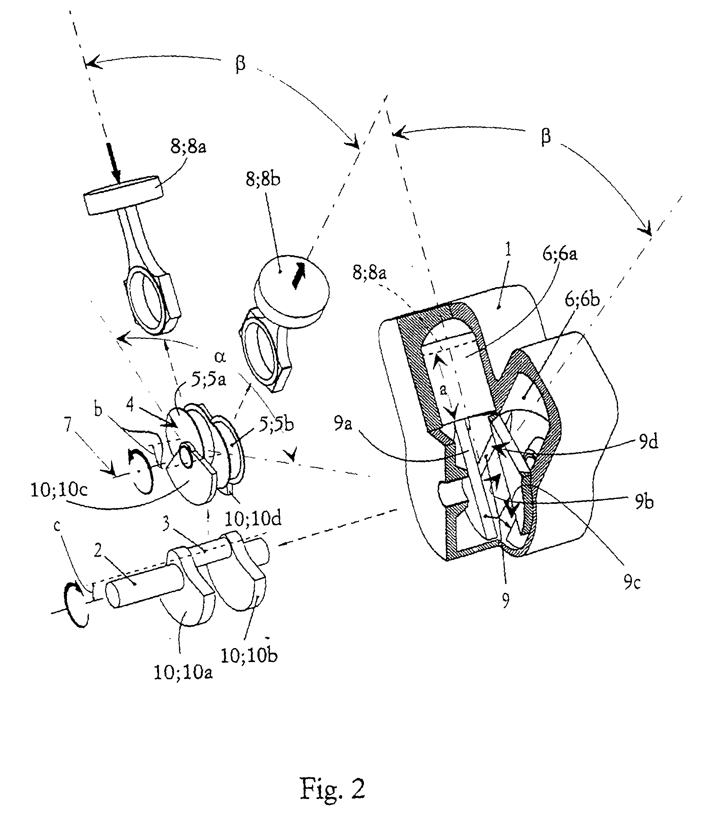

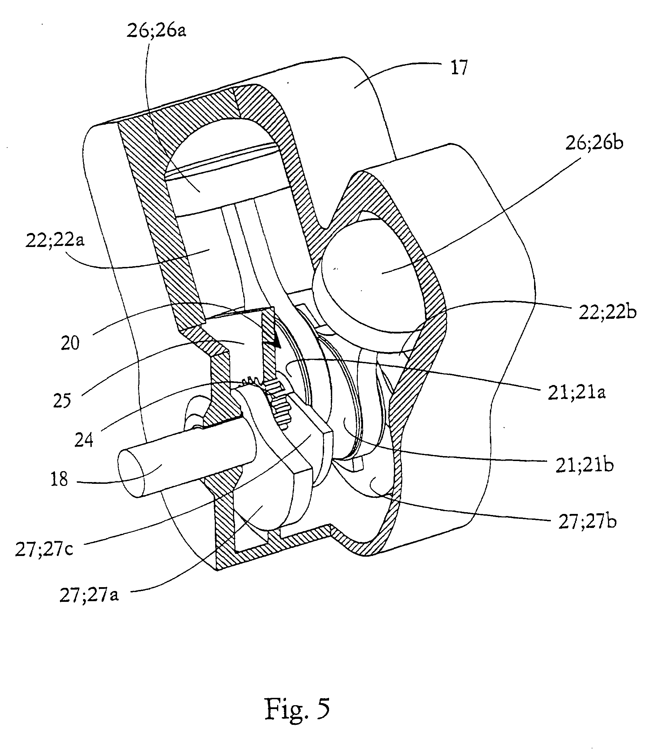

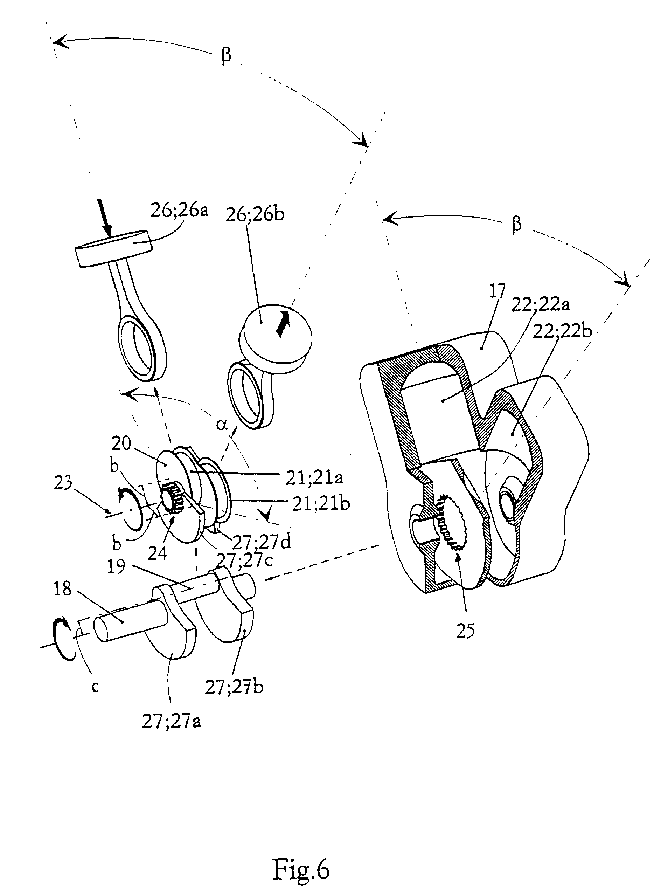

The piston mechanism according to the invention is implemented as a slide-controlled piston mechanism in Figs. 1 to 4 and as a gear wheel controlled piston mechanism in Figs. 5 and 6. The structure of the slide-controlled piston mechanism is shown in Figs. 1 and 2. Crankshaft 2 is pillowed in cylinder block 1 of the slide-controlled piston mechanism, the crankshaft comprising eccentrically fitted crank journal 3. Rotating disc 4 is pillowed in crank journal 3 of crankshaft 2. Rotating disc 4 comprises two discs 5; 5a, 5b which are fitted eccentrically with respect to axis 7 of crank journal 3. Angle α between discs 5; 5a, 5b is two times as large as angle β between cylinders 6; 6a, 6b. Angle α between discs 5; 5a, 5b refers to an angle projected on the perpendicular plane of axis 7 between straight lines that are imagined to be running through the eccentric attachment points and the midpoint of the discs. Angle (3 between cylinders 6; 6a, 6b refers to an angle projected on the perpendicular plane of axis 7 between the axes of the cylinders and, at the same time, to an angle projected on the perpendicular plane of axis 7 between the linear directions of movement of pistons 8; 8a, 8b that move in the cylinders. Eccentricity b (= the distance between the attachment point and the midpoint of the disc) of each disc 5; 5a, 5b with respect to the slewing axis 7 of the rotating disc (and, at the same time, to that of crank journal 3) is one fourth of total cylinder stroke a of piston 8; 8a, 8b. Eccentricity c of crank journal 3 with respect to crankshaft 2, i.e., distance c between the longitudinal axis of crank journal 3 (and, in this application, between slewing axis 7 of the rotating disc) and the slewing axis of crankshaft 2 is also one fourth of total length a of piston 8; 8a, 8b. Pistons 8; 8a, 8b are pillowed in discs 5; 5a, 5b of rotating disc 4 and on guides 9 in cylinder block 1. There are two guides 9a, 9b; 9c, 9d per each piston 8a; 8b.

Pistons 8; 8a, 8b are adapted to make linear and slide-controlled movements in cylinders 6; 6a, 6b. The rotative velocity of rotating disc 4 with respect to crank journal 3 is two times as high as the rotating of crankshaft 2 with respect to cylinder block 1. The direction of rotation of rotating disc 4 with respect to crank journal 3 is opposite to the direction of rotation of crankshaft 2 with respect to cylinder block 1. The rotative velocities of the slide-controlled pistons 8; 8a, 8b with respect to discs 5; 5a, 5b of rotating disc 4 are as high as the rotative velocity of crankshaft 2 with respect to cylinder block 1. When crankshaft 2 turns half a cycle, i.e., 180°, the slice-controlled pistons 8; 8a, 8b move a distance the length of which is the total cylinder stroke a. The slide-controlled pistons 8; 8a, 8b change their direction of movement in their upper and lower dead points after each half cycle of crankshaft 2, whereby a volume change as large as the stroke capacity is effected in cylinders 6; 6a, 6b.

Counterweights 10; 10a, 10b are adapted on crankshaft 2 and rotating disc 4. The first counterweights 10; 10a, 10b are adapted in connection with crank journal 3. Crank journal 3 is located between counterweights 10a, 10b, as shown in Fig. 2, for example. The second counterweights 10; 10c, 10d, of which there are two, are adapted in connection with rotating disc 4. They are preferably attached to the rotating disc 4 on both sides thereof, as illustrated in Fig. 2. The first counterweights 10; 10a, 10b are adapted on the opposite side of crankshaft 2 with respect to crank journal 3 and the second counterweights 10; 10c, 10d, correspondingly, on the opposite side of crank journal 3 with respect to the rotating disc. Counterweights 10; 10a, 10b, 10c, 10d are used to implement the dynamic balancing of the piston mechanism.

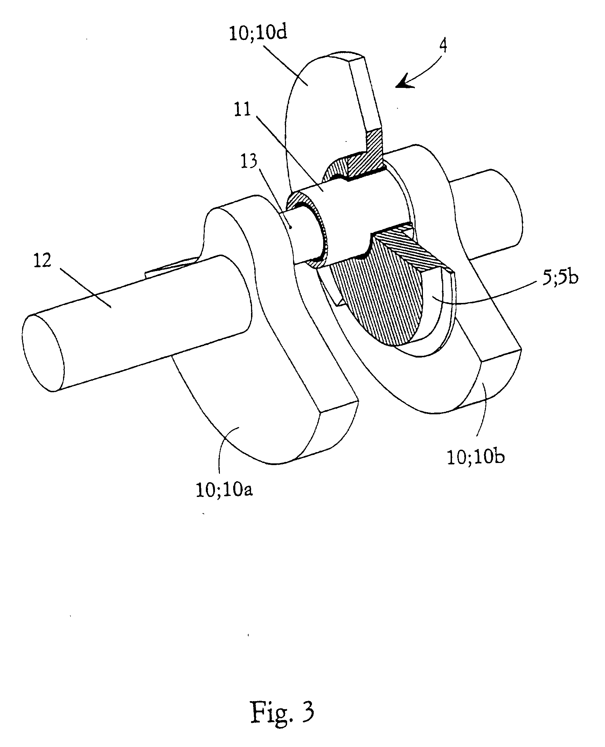

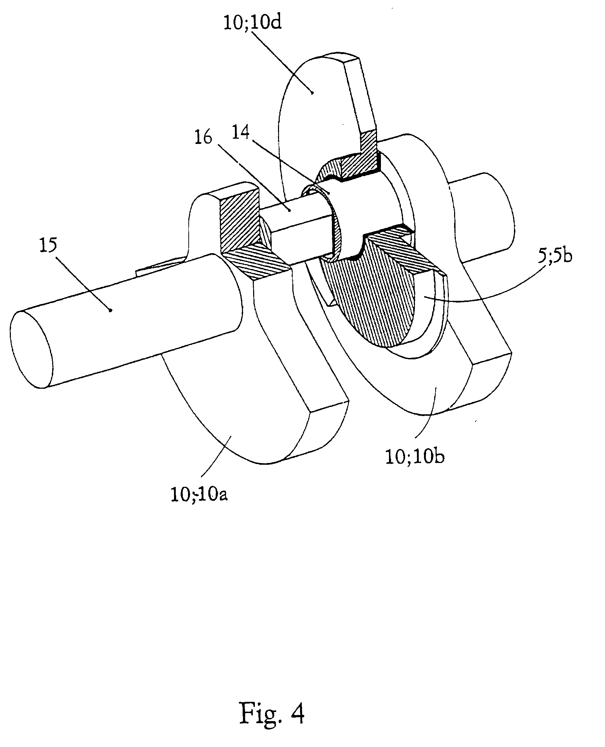

When one more degree of freedom is given to the slide-controlled piston mechanism, Figs. 1 and 2, it is easier to implement because of lower requirements for accuracy. The additional degree of freedom is preferably given with the aid of eccentric sleeve 11 (Fig. 3) or sliding sleeve 14 (Fig. 4). In the application of Fig. 3, the eccentric sleeve 11 is pillowed between crank journal 13 of crankshaft 12 and the rotating disc 4. The cylinder jacket of eccentric sleeve 11 is eccentric with respect to the cylinder-like hole running through it. Because of the shape of eccentric sleeve 11, crank journal 13 of crankshaft 12 is placed eccentrically compared with the location of crank journal 3 of crankshaft 2. In the application of Fig. 4, sliding sleeve 14 is pillowed between crank journal 16 and rotating disc 4. The jacket of sliding sleeve 14 is in the form of a cylinder but the cross-section of the hole is angular. The movement of sliding sleeve 14 with respect to crank journal 16 in the radial direction of crankshaft 15 is only possible because of the shapes of crank journal 16 and the hole of sliding sleeve 14. In Figs. 3 and 4, only one disc 5; 5b of rotating disc 4 and its counterweight 10; 10b are shown for the sake of clarity.

The structure of the gear wheel controlled piston mechanism is shown in Figs. 5 and 6. Its structure and operating principle are similar to that of the slide-controlled piston mechanism with the following deviations. Crankshaft 18 with eccentrically fitted crank journal 19 is pillowed in cylinder block 17 of the gear wheel controlled piston mechanism. Rotating disc 20 is pillowed in crank journal 19 of crankshaft 18. Rotating disc 20 comprises two discs 21; 21a, 21b which are fitted eccentrically with respect to axis 23 of crank journal 19. Angle α between discs 21; 21a, 21b is two times the angle β between cylinders 6; 6a, 6b. Angles α and β are defined in the same was as described above in connection with Fig. 2. Eccentricity b of each disc 21; 21a, 21b with respect to the slewing axis 23 of the rotating disc is one fourth of the total cylinder stroke a of piston 26; 26a, 26b. Distance c of the longitudinal axis of crank journal 19 from the slewing axis of crankshaft 18 is also one fourth of the total cylinder stroke a of piston 26; 26a, 26b. Pistons 26; 26a, 26b are pillowed in discs 21; 21a, 21b of rotating disc 20 and adapted to move in cylinders 22; 22a, 22b. Counterweights 27, i.e. the first counterweights 27a, 27b and the second counterweights 27c, 27d, are fitted on crankshaft 18 and rotating disc 20 in a corresponding way as in the slide-controlled piston mechanism of Figs. 1 and 2.

The most essential differences of the gear wheel controlled piston mechanism with respect to the slide-controlled mechanism are the following. Rotating disc 20 of the gear wheel controlled piston mechanism has gear wheel 24 placed on the slewing axis 23 thereof, the gear wheel being provided with an external tooth system and corresponding to the tooth ring 25 provided with an internal tooth system and firmly attached to cylinder block 17 of the gear wheel controlled piston mechanism. When the gear ratio i of gear wheel 24 and tooth ring 25 is 1/2, pistons 26; 26a, 26b of the gear wheel controlled piston mechanism pillowed in discs 21; 21a, 21b of rotating disc 20 move linearly in their cylinders 22; 22a, 22b.

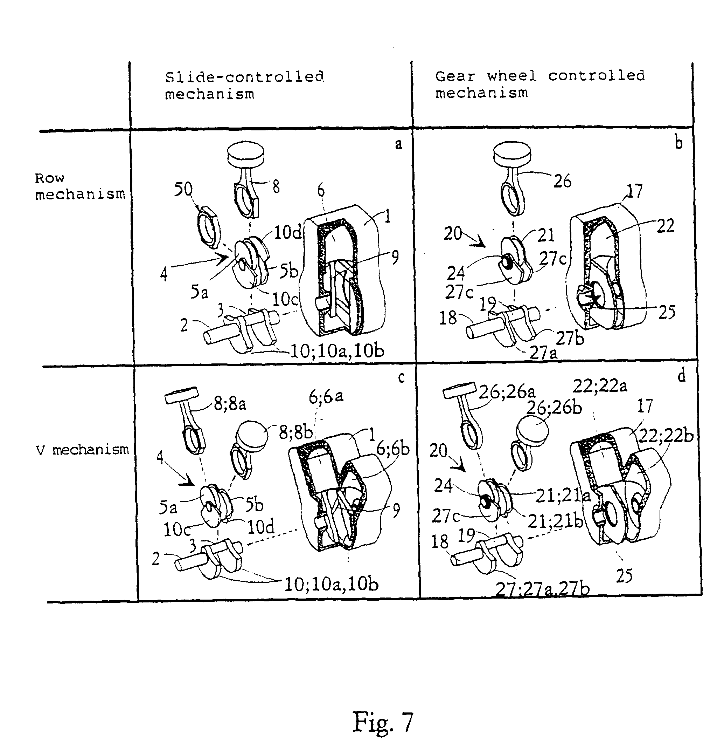

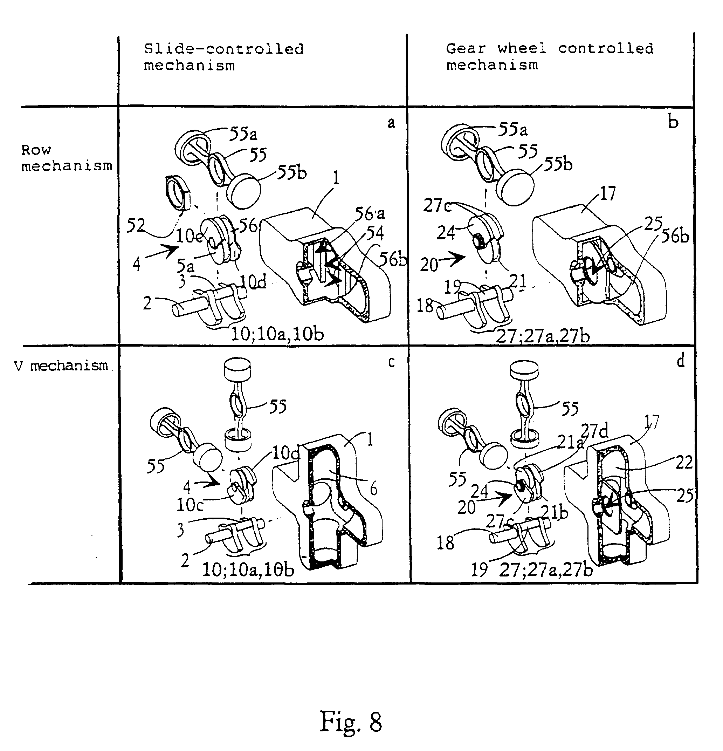

The slide-controlled piston mechanism and the gear wheel controlled piston mechanism can be implemented by using various cylinder location alternatives, such as a row mechanism, Figs. 7a, 7b, a V-mechanism, Figs. 7c, 7d, a boxer mechanism, Figs. 8a, 8b, and a cross mechanism, Figs. 8c, 8d. The slide-controlled row and boxer mechanisms, Figs. 7a and 8a, are made to move by force with the aid of jockey valve 50. Jockey valve 50 is fitted in the second disc 5b of rotating disc 4, whereas piston 51 is pillowed in the first disc 5a of rotating disc 4. Jockey valve 50 and piston 51 in Fig. 7a are pillowed in guides 53 in cylinder block 1. Correspondingly, the jockey valve 52 in Fig. 8a is pillowed in guides 54 of cylinder block 1. The movement of piston 55 is controlled in cylinder space 56a, 56b with the aid of its cylindrical parts 55a, 55b. The structure of the slide-controlled piston mechanism in Figs. 7a, 7c, 8a, and 8c corresponds to those showed in Figs. 1 to 4 and, correspondingly, the structure of the gear wheel controlled piston mechanism corresponds to those shown in Figs. 7b, 7d, 8b, and 8d. The same reference numbers are partly used for the corresponding parts. The cylinder location alternatives presented above can also be implemented as multirow applications.

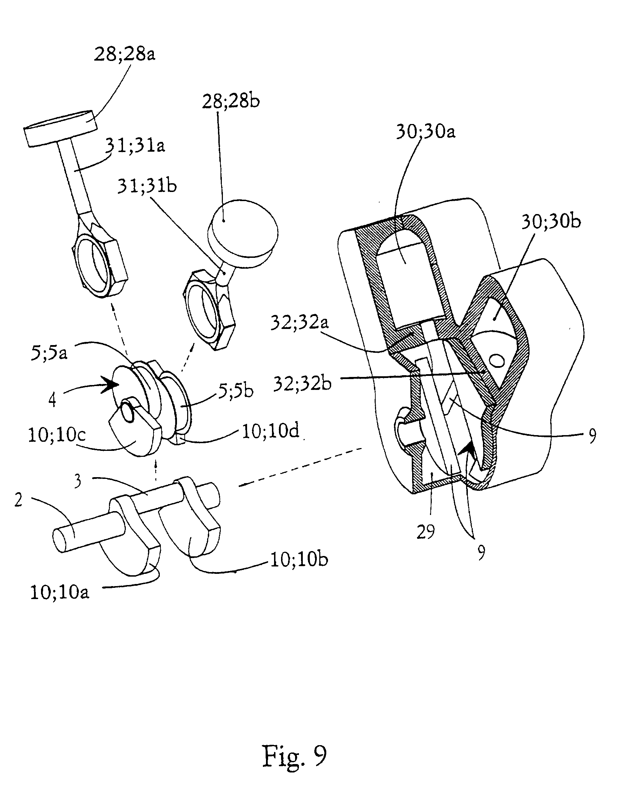

The piston mechanism according to the invention can be implemented as a double acting version, as illustrated in Fig. 9. This structure corresponds, to a large extent, to the piston mechanism shown in Figs. I and 2 and the same reference numbers are mainly used for the corresponding parts. This application also utilises the cylinder capacities of cylinders 30; 30a, 30b of the double acting piston mechanism in the side of crankcase 29 of pistons 28; 28a, 28b of the double acting piston mechanism and the cylinder capacities separated from crankcase 29 by walls 32; 32a, 32b and located between round piston rods 31; 31a, 31b.

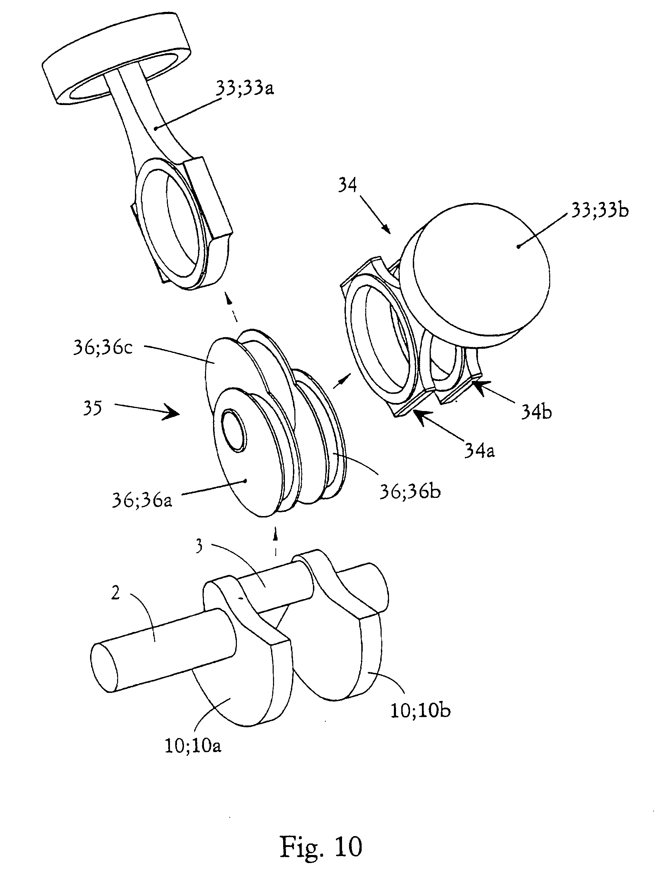

In the application of Fig. 10, rod 34 of one piston 33b of the two pistons 33; 33a, 33b of the piston mechanism can be implemented in two parts 34a, 34b. In this case, because of the symmetrical structure, the counterweights of discs 36; 36a, 36b; 36c of rotating disc 35 can be omitted. With other respects, this structure corresponds to the piston mechanism shown in Figs. 1 and 2, for example, and the same reference numbers have mainly been used for the corresponding parts.

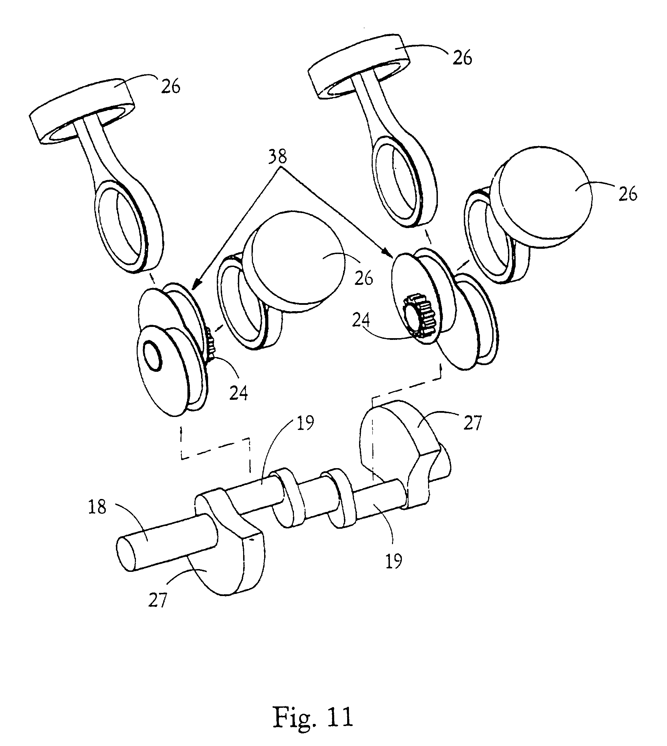

In multicylinder piston mechanisms, the counterweights of rotating discs 38 can be omitted, Fig. 11. In this case, the rotating disc structures are implemented symmetrically. In this application, the multicylinder structure corresponds to the piston mechanism shown in Figs. 5 and 6, for example, with respect to one cylinder, and the same reference numbers have mainly been used for the corresponding parts.

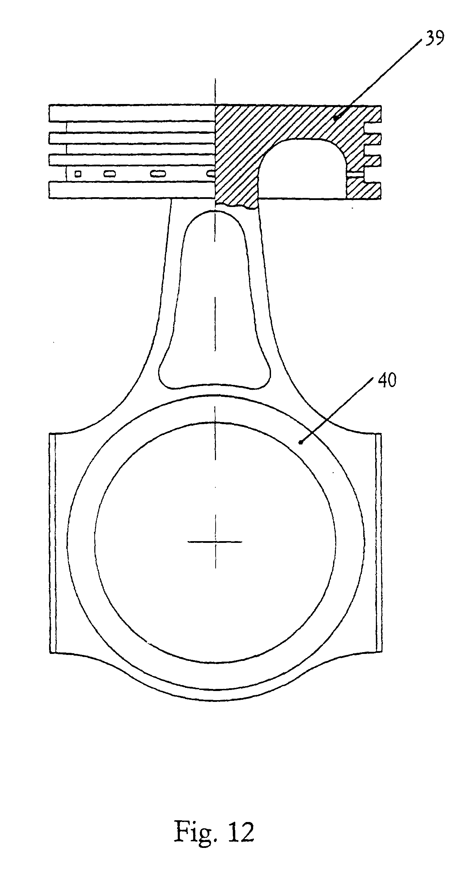

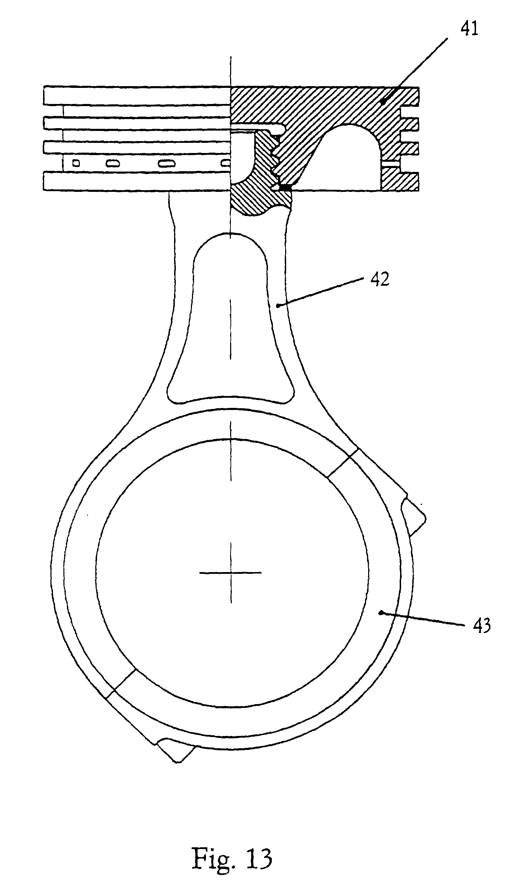

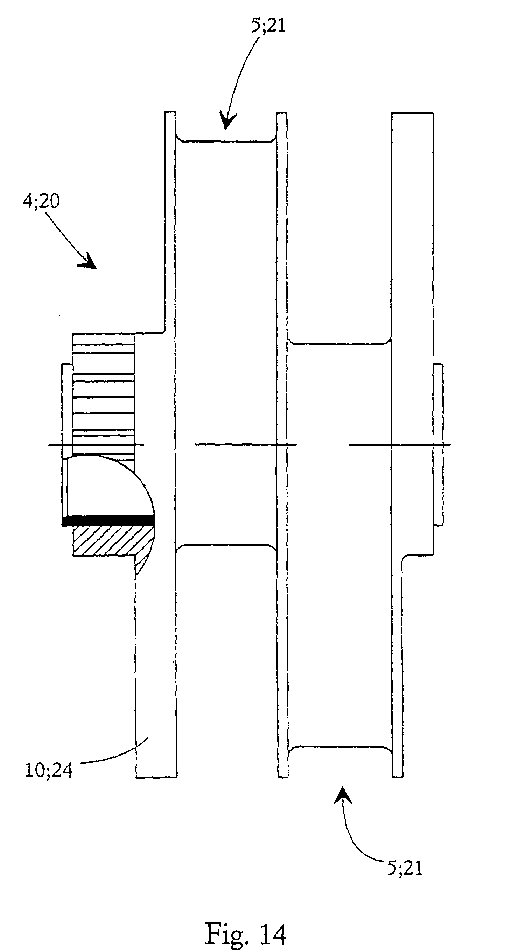

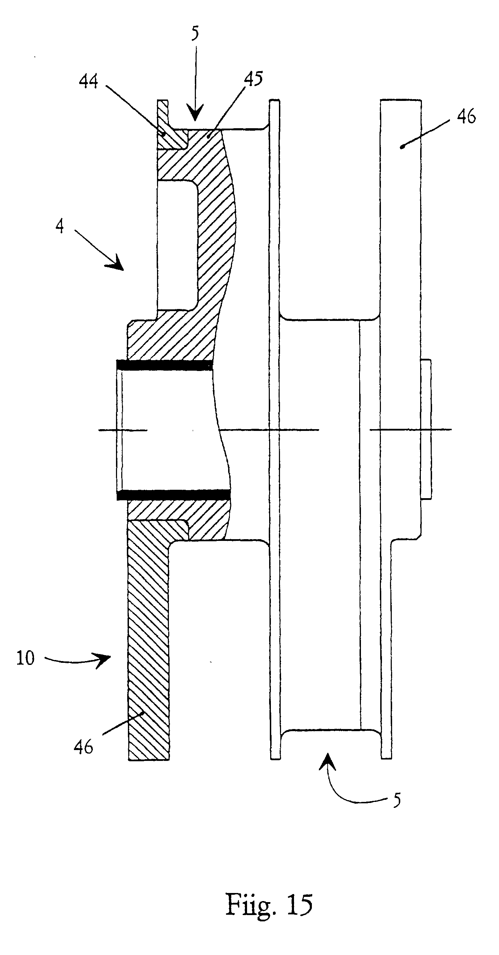

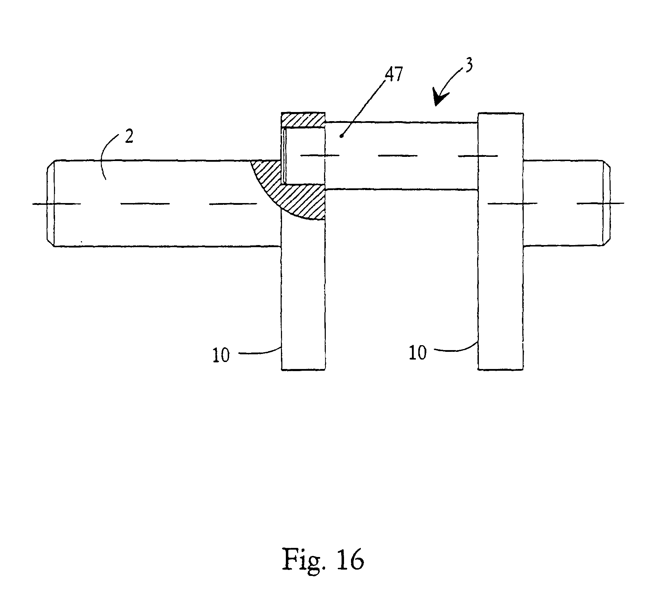

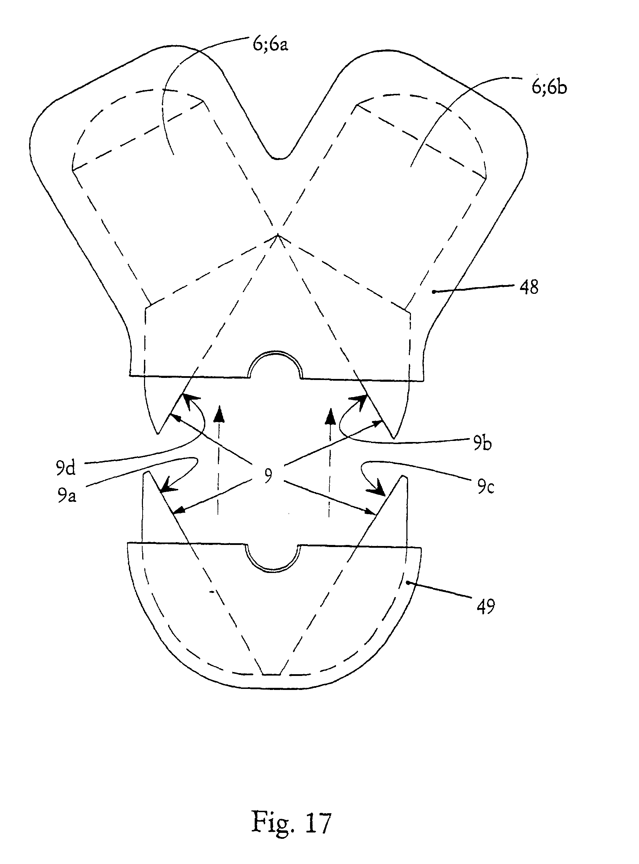

The disassembling of the mechanism has an effect on the structure of the parts of the piston mechanism according to the invention. The piston can be integral, Fig. 12, or dismountable at both its upper and lower end, Fig. 13. The actual piston part 39 and the bearing 40 of the lower end of the integral piston form an integral whole. The actual piston part 41 of the dismountable piston is connected to piston rod 42 by threads, for example. Bearing 43 of the lower end of the piston can be divided into interconnected parts in a corresponding way as in a conventional piston mechanism. Rotating disc 4; 20 can also be integral, Fig. 14, or dismountable, Fig. 15. Ring fasteners 44 of the dismountable rotating disc, containing possible counterweights 46, can be jointed to body part 45 of the rotating disc, for example, by shrink joints, threads, or screws. Crankshaft 2 must generally be rendered dismountable where crank journal 47 is to enable the installing of the rotating disc, Fig. 16. The cylinder block of the mechanism can be implemented in various ways, for example, by dividing guides 9 of the pistons of the slide-controlled piston mechanism into body part 48 and detachable part 49, Fig. 17.

## Claims

1. A piston mechanism comprising two pistons (8; 8a, 8b; 26; 26a, 26b) and a cylinder block (1; 17) in which the pistons slide, a crankshaft (2; 18) which is pillowed in the cylinder block (1; 17); a crank journal (3; 19) which is fitted on the crankshaft (2; 18); a rotating disc (4; 20) which is pillowed on the crank journal (3; 19); and the rotating disc (4; 20) comprising eccentrically placed discs (5; 5a, 5b; 21; 21a, 21b) on which the pistons (8; 8a, 8b; 26; 26a, 26b) are pillowed, **characterised in that** the eccentricity (c) of the crank journal (3; 19) with respect to the crankshaft (2; 18) is one fourth of the total cylinder stroke (a) of the piston (8; 8a, 8b; 26; 26a, 26b) and that the rotating disc (4; 20) pillowed on the crank journal (3; 19) of the crankshaft (2; 18) comprises two eccentrically placed discs (5; 5a, 5b; 21a, 21b), the angle (α) between the discs being two times the angle (β) between the cylinders (6; 22), the angle (α) defined by the angle between lines connecting the center of each disc with the slewing axis (7; 23) of the rotating disc, the angle (β) defined by the angle between the cylinder axes, these lines and cylinder axes being projected on a plane perpendicular to the slewing axis (7; 23) of the rotating disc (4; 20), and the eccentricity of the discs with respect to the slewing axis (7; 23) of the rotating disc (4; 20) being one fourth of the total cylinder stroke (a) of the piston (8; 8a, 8b; 26; 26a, 26b).

2. A piston mechanism according to Claim 1, **characterised in that** the cylinders (6; 6a, 6b) comprise linearly moving pistons (8; 8a, 8b) which are pillowed on the discs (5; 5a, 5b) of the rotating disc (4) and on guides (9; 9a, 9b, 9c, 9d) in the cylinder block (1).

3. A piston mechanism according to Claim 2, **characterised in that** some of the piston guides (9) are jointed to a body part (48) of the cylinder block and some to a detachable part (49) of the cylinder block.

4. A piston mechanism according to any of the preceding Claims, **characterised in that** the piston mechanism is provided with an eccentric sleeve (11) which is pillowed between the crank journal (13) of the crankshaft (12) and the rotating disc (4), the hole of the eccentric sleeve (11) being placed eccentrically with respect to the outer periphery of the eccentric sleeve (11), and the crank journal (13) of the crankshaft (12) used in connection with the eccentric sleeve (11) is placed eccentrically, to the extent of the eccentricity of the hole of the eccentric sleeve (11), as compared with the location of a crank journal (3) of the crankshaft (2) of a piston mechanism, without an eccentric sleeve.

5. A piston mechanism according to any of the preceding Claims 1 to 3, **characterised in that** the piston mechanism comprises a sliding sleeve (14) which is pillowed between the crank journal (16) of the crankshaft (15) and the rotating disc (4).

6. A piston mechanism according to Claim 1, **characterised in that** the rotating disc (20) comprises a gear wheel (24) provided with an external tooth system and fitted co-axial to the slewing axis (23) of the rotating disc, and the cylinder block (17) comprises a tooth ring (25) provided with an internal tooth system, the gear wheel (24) corresponding to tooth ring (25).

7. A piston mechanism according to Claim 6, **characterised in that** the gear ratio i between the gear wheel (24) and the tooth ring (25) is 1/2, whereby the pistons (26; 26a, 26b) pillowed in the discs (21; 21a, 21b) of the rotating disc (20) carry out a linear movement in their cylinders (22; 22a, 22b).

8. A piston mechanism according to any of the preceding Claims, **characterised in that** a counterweight (10; 27) is fitted to the crankshaft (2; 18) and the rotating disc (4; 20).

9. A piston mechanism according to any of the preceding Claims, **characterised in that** two piston rods (34a, 34b) of the same type are jointed to the actual piston part (34), both piston rods comprising a respective bearing application to the rotating disc (35).

10. A piston mechanism according to any of the preceding Claims, **characterised in that** the rotating disc (38) is made dismountable such that the counterweight (46) comprises a ring fastener (44) of the rotating disc, by which it is connected to the body part (45) of the rotating disc, for example, by shrink joints, threads or screws.

## Patentansprüche

1. Kolbenmechanismus umfassend zwei Kolben (8; 8a, 8b; 26; 26a, 26b) und einen Zylinderblock (1; 17), in dem die Kolben gleiten, eine Kurbelwelle (2; 18), die in dem Zylinderblock (1; 17) gelagert ist; ein Kurbelgelenk (3; 19), das an der Kurbelwelle (2; 18) festgelegt ist; eine rotierende Scheibe (4; 20), die an dem Kurbelgelenk (3; 19) gelagert ist; und die rotierende Scheibe (4; 20) umfasst exzentrisch angeordnete Scheiben (5; 5a, 5b; 21; 21 a, 21b) auf welchen die Kolben (8; 8a, 8b; 26; 26a, 26b) gelagert sind,
**dadurch gekennzeichnet, dass** die Exzentrizität c) des Kurbelgelenks (3; 19) relativ zur Kurbelwelle (2; 18) ein Viertel des gesamten Kolbenmhubs (a) des Kolbens (8; 8a, 8b; 26; 26a, 26b) ist und dass die rotierende Scheibe (4; 20), die an dem Kurbelgelenk (3; 19) der Kurbelwelle (2; 18) gelagert ist, zwei exzentrisch angeordnete Scheiben (5; 5a, 5b; 21a, 21b) umfasst, wobei der Winkel (α) zwischen den Scheiben dem Doppelten des Winkels (β) zwischen den Zylindern (6; 22) beträgt, wobei der Winkel (α) definiert ist durch den Winkel zwischen den Linien, die das Zentrum jeder Scheibe mit den Schwenkachsen (7; 23) der rotierenden Scheibe verbindet und der Winkel (β) definiert ist durch den Winkel zwischen den Zylinderachsen, wobei diese Linien und Zylinderachsen auf eine Ebene projiziert sind, die senkrecht zu der Schwenkachse (7; 23) der rotierenden Scheibe (4; 20) liegt, und die Exzentrizität der Scheiben relativ zur Schwenkachse (7; 23) der rotierenden Scheibe (4; 20) ein Viertel des gesamten Kolbenhubs (a) des Kolbens (8; 8a, 8b; 26; 26a, 26b) beträgt.

2. Kolbenmechanismus nach Anspruch 1,
**dadurch gekennzeichnet, dass** die Zylinder (6; 6a, 6b) linear bewegbare Kolben (8; 8a, 8b) umfassen, die auf den Scheiben (5; 5a, 5b) der rotierenden Scheibe (4) und den Führungen (9; 9a, 9b, 9c, 9d) in dem Zylinderblock (1) gelagert sind.

3. Kolbenmechanismus nach Anspruch 2,
**dadurch gekennzeichnet, dass** einige der Kolbenführungen (9) mit einem Körperteil (48) des Zylinderblocks verbunden sind und einige mit einem entfernbaren Teil (49) des Zylinderblocks.

4. Kolbenmechanismus nach einem der vorhergehenden Ansprüche,
**dadurch gekennzeichnet, dass** der Kolbenmechanismus versehen ist mit einer exzentrischen Hülse (11), die zwischen dem Kurbelgelenk (13) der Kurbelwelle (12) und der rotierenden Scheibe (4) gelagert ist, wobei das Loch der exzentrischen Hülse (11) exzentrisch relativ zum äußeren Umfangsbereich der exzentrischen Hülse (11) ausgebildet ist, und das Kurbelgelenk (13) der Kurbelwelle (12), das in Verbindung mit der exzentrischen Hülse (11) verwendet wird, exzentrisch angeordnet ist, in dem Umfang der Exzentrizität des Lochs der exzentrischen Hülse (11) verglichen mit der Anordnung eines Kurbelgelenks (3) der Kurbelwelle (2) eines Kolbenmechanismus ohne eine exzentrische Hülse.

5. Kolbenmechanismus nach einem der vorhergehenden Ansprüche 1 bis 3,
**dadurch gekennzeichnet, dass** der Kolbenmechanismus eine Gleithülse (14) umfasst, die zwischen dem Kurbelgelenk (16) der Kurbelwelle (15) und der rotierenden Scheibe (4) angeordnet ist.

6. Kolbenmechanismus nach Anspruch 1,
**dadurch gekennzeichnet, dass** die rotierende Scheibe (20) ein Zahnrad (24) umfasst, das mit einer äußeren Zahnung versehen ist und koaxial zur Schwenkachse (23) der rotierenden Scheibe ausgebildet ist, und der Zylinderblock (17) einen Zahnring (25) mit einer inneren Zahnung umfasst, wobei das Zahnrad (24) zu dem Zahnring (25) passt.

7. Kolbenmechanismus nach Anspruch 6,
**dadurch gekennzeichnet, dass** das Übersetzungsverhältnis i zwischen dem Zahnrad (24) und dem Zahnring (25) 1/2 beträgt, wobei die Kolben (26; 26a, 26b), die in den Scheiben (21; 21a, 21b) der Rotationsscheibe (20) gelagert sind, eine lineare Bewegung in ihren Zylindern (22; 22a, 22b) ausführen.

8. Kolbenmechanismus nach einem der vorangehenden Ansprüche,
**dadurch gekennzeichnet, daß** ein Gegengewicht (10; 27) an der Kurbelwelle (2; 18) und der rotierenden Scheibe (4; 20) befestigt ist.

9. Kolbenmechanismus nach einem der vorhergehenden Ansprüche,
**dadurch gekennzeichnet, dass** zwei Pleuelstangen (34a, 34b) des gleichen Typs mit dem zugehörigen Kolbenteil (34) verbunden sind, wobei beide Pleuelstangen eine eigene Lagerung an der Rotationsscheibe (35) aufweisen.

10. Kolbenmechanismus nach einem der vorhergehenden Ansprüche,
**dadurch gekennzeichnet, dass** die Rotationsscheibe (38) unentfernbar ausgebildet ist, so dass das Gegengewicht (46) eine Ringbefestigung (44) der Rotationsscheibe umfasst, durch welche diese mit dem Körperteil (45) der Rotationsscheibe verbunden ist, z.B. durch Schrumpfverbindung, Gewinde oder Schrauben.

## Revendications

1. Mécanisme à pistons comportant deux pistons (8 ; 8a, 8b ; 26 ; 26a, 26b) et un bloc-cylindres (1 ; 17) dans lequel les pistons coulissent, un vilebrequin (2 ; 18) qui est installé dans le bloc-cylindres (1 ; 17), un tourillon de vilebrequin (3 ; 19) qui est agencé sur le vilebrequin (2 ; 18), un disque rotatif (4 ; 20) qui est installé sur le tourillon de vilebrequin (3 ; 19), et le disque rotatif (4 ; 20) comportant des disques positionnés de manière excentrée (5 ; 5a, 5b ; 21 ; 21a, 21b) sur lesquels les pistons (8 ; 8a, 8b ; 26 ; 26a, 26b) sont installés, **caractérisé en ce que** l'excentricité (c) du tourillon de vilebrequin (3 ; 19) par rapport au vilebrequin (2 ; 18) correspond à un quart de la course de cylindre totale (a) du piston (8 ; 8a, 8b ; 26 ; 26a, 26b), et **en ce que** le disque rotatif (4 ; 20) installé sur le tourillon de vilebrequin (3 ; 19) du vilebrequin (2 ; 18) comporte deux disques positionnés de manière excentrée (5 ; 5a, 5b ; 21a, 21b), l'angle (α) entre les deux disques étant deux fois l'angle (β) existant entre les cylindres (6 ; 22), l'angle (α) étant défini par l'angle existant entre des lignes reliant le centre de chaque disque à l'axe de rotation (7 ; 23) du disque rotatif, l'angle (β) étant défini par l'angle existant entre les axes de cylindre, ces lignes et axes de cylindre étant projetées dans un plan perpendiculaire à l'axe de rotation (7 ; 23) du disque rotatif (4 ; 20), et l'excentricité des disques par rapport à l'axe de rotation (7 ; 23) du disque rotatif (4 ; 20) correspondant à un quart de la course de cylindre totale (a) du piston (8 ; 8a, 8b ; 26 ; 26a, 26b).

2. Mécanisme à pistons selon la revendication 1, **caractérisé en ce que** les cylindres (6 ; 6a, 6b) comportent des pistons mobiles de manière linéaire (8 ; 8a, 8b) qui sont installés sur les disques (5 ; Sa, 5b) du disque rotatif (4), et sur des guides (9 ; 9a, 9b, 9c, 9d) situés dans le bloc-cylindres.

3. Mécanisme à pistons selon la revendication 2, **caractérisé en ce que** certains des guides de piston (9) sont reliés à une partie de corps (48) du bloc-cylindres, et certains à une partie amovible (49) du bloc-cylindres.

4. Mécanisme à pistons selon l'une quelconque des revendications précédentes, **caractérisé en ce que** le mécanisme à pistons est muni d'un manchon excentré (11) qui est installé entre le tourillon (13) du vilebrequin (12) et le disque rotatif (4), le trou du manchon excentré (11) étant positionné de manière excentrée par rapport à la périphérie extérieure du manchon (11), et le tourillon (13) du vilebrequin (12), utilisé en relation avec le manchon excentré (11), est positionné de manière excentrée, selon l'importance de l'excentricité du trou du manchon excentré (11), par comparaison avec l'emplacement d'un tourillon (3) du vilebrequin (2) d'un mécanisme à pistons sans un manchon excentré.

5. Mécanisme à pistons selon l'une quelconque des revendications 1 à 3, **caractérisé en ce que** le mécanisme à pistons comporte un manchon coulissant (14) qui est installé entre le tourillon (16) du vilebrequin (15) et le disque rotatif (4).

6. Mécanisme à pistons selon la revendication 1, **caractérisé en ce que** le disque rotatif (20) comporte une roue d'engrenage (24) munie d'un système de dents extérieures, et agencée coaxialement par rapport à l'axe de rotation (23) du disque rotatif, et le bloc-cylindres (17) comporte une couronne dentée (25) munie d'un système de dents intérieures, la roue d'engrenage (24) correspondant à la couronne dentée (25).

7. Mécanisme à pistons selon la revendication 6, **caractérisé en ce que** le rapport d'engrenage i existant entre la roue d'engrenage (24) et la couronne dentée (25) est de 1/2, de sorte que les pistons (26 ; 26a, 26b) installés dans les disques (21 ; 21a, 21b) du disque rotatif (20) effectuent un déplacement linéaire dans leurs cylindres (22 ; 22a, 22b).

8. Mécanisme à pistons selon l'une quelconque des revendications précédentes, **caractérisé en ce qu'**un contrepoids (10 ; 27) est agencé sur le vilebrequin (22 ; 18) et le disque rotatif (4 ; 20).

9. Mécanisme à pistons selon l'une quelconque des revendications précédentes, **caractérisé en ce que** deux tiges de piston (34a, 34b) du même type sont reliées à la partie de piston réelle (34), les deux tiges de piston constituant l'application d'un palier respectif sur le disque rotatif (35).

10. Mécanisme à pistons selon l'une quelconque des revendications précédentes, **caractérisé en ce que** le disque rotatif (38) est monté de manière démontable, et **en ce que** le contrepoids (46) comporte une fixation annulaire (44) du disque rotatif, par laquelle il est connecté à la partie de corps (45) du disque rotatif, par exemple, par des joints rétrécis, des filets ou des vis.
